# FASCICULE DE BREVET EUROPEEN

(11) **EP 1 857 741 B1**
(45) Date de publication et mention de la délivrance du brevet: **24.07.2019**
(21) Numéro de dépôt: 07075354.6
(22) Date de dépôt: 07.05.2007
(51) Int. Cl.: F23R 3/10, F23R 3/28, F23R 3/14

(54) **Chambre de combustion d'une turbomachine**
Brennkammer einer Gasturbine
Combustion chamber of a turbomachine

(30) Priorité: 19.05.2006 FR 0604486
(43) Date de publication de la demande: 21.11.2007
(73) Titulaire: Safran Aircraft Engines, 75015 Paris (FR)
(72) Inventeur: Commaret, Patrice, 77950 Rubelles (FR); Sandelis, Denis, 77370 Nangis (FR)
(74) Mandataire: Pichat, Thierry

(56) Documents cités:
- EP-A1- 0 153 842
- EP-A1- 0 182 687
- EP-A1- 0 833 107
- DE-B- 1 215 443
- FR-A1- 2 673 454
- GB-A- 802 545
- US-A- 1 620 754
- US-A- 4 312 186
- US-A- 4 313 721
- US-A- 4 338 360

## Description

La présente invention concerne une chambre de combustion d'une turbomachine, telle qu'un turboréacteur ou un turbopropulseur d'avion.

Les chambres de combustion des turbomachines doivent être conçues pour limiter la production de gaz nocifs tels que les oxydes d'azote (NOₓ) et le dioxyde de carbone (CO₂) qui sont rejetés à l'atmosphère.

De façon classique, une chambre de combustion de turbomachine a une forme annulaire et comprend une pluralité de bols mélangeurs qui sont montés sur le fond de la chambre et régulièrement répartis autour de l'axe longitudinal de la chambre. Chaque bol est monté en aval d'un injecteur de carburant, dans l'axe de cet injecteur, et comprend une paroi sensiblement tronconique formée avec une rangée annulaire d'orifices d'injection d'air pour produire une nappe annulaire d'un mélange d'air et de carburant destiné à être enflammé dans la zone primaire de la chambre.

La répartition et les dimensions des orifices d'injection d'air des bols sont théoriquement déterminées pour que la nappe annulaire ait une forme et un angle d'ouverture adaptés au mieux aux différents régimes de fonctionnement de la turbomachine.

Pour répondre à ces exigences, le document EP-A1-0 598 662 décrit une chambre de combustion à deux rangées annulaires coaxiales de bols mélangeurs comportant des orifices d'injection d'air répartis en rangées annulaires dans chaque bol, l'une des rangées de bols formant une tête de ralenti, et l'autre de ces rangées de bols formant une tête de décollage.

Cette solution a l'inconvénient d'être encombrante et de nécessiter un grand nombre d'injecteurs et de bols. Par ailleurs, une chambre de combustion selon le préambule de la revendication 1 est décrite par le document EP-A1-0 833 107.

La présente invention a pour objet une chambre de combustion qui ne présente pas les inconvénients de l'art antérieur et qui, en particulier, comprend un nombre réduit d'injecteurs et assure un compromis optimal entre le fonctionnement au ralenti et le fonctionnement en plein gaz.

Elle propose à cet effet une chambre de combustion d'une turbomachine, comprenant au moins un bol à paroi sensiblement tronconique formé avec une rangée annulaire d'orifices d'injection d'air qui sont régulièrement répartis autour de l'axe du bol, et un injecteur de carburant agencé en amont du bol et dans l'axe de celui-ci pour produire une nappe annulaire d'un mélange d'air et de carburant injecté en aval du bol, caractérisé en ce que la rangée annulaire d'orifices d'injection d'air comprend des orifices de plus faible diamètre et des orifices de plus grand diamètre qui sont disposés en alternance et régulièrement répartis autour de l'axe du bol pour produire deux nappes annulaires de mélange d'air et de carburant, qui sont coaxiales et ont des angles d'ouverture différents.

Dans la chambre de combustion selon l'invention, la nappe produite par les orifices de plus faible diamètre du bol a un angle d'ouverture relativement grand qui est optimisé pour le régime de ralenti et les régimes de la turbomachine nécessitant un temps de séjour relativement long du mélange d'air et de carburant dans la zone primaire de la chambre, et la nappe produite par les orifices de plus grand diamètre a un angle d'ouverture relativement faible qui est optimisé pour le fonctionnement plein gaz de la turbomachine.

L'invention permet donc de former dans le bol deux nappes de carburant avec des angles d'ouverture différents au moyen d'une unique rangée annulaire d'orifices d'injection d'air. Ces nappes se chevauchent d'un bol à l'autre et la plus grande ouverture des nappes générées par les orifices de plus petit diamètre permet d'augmenter le pas circonférentiel entre les bols et ainsi de réduire le nombre d'injecteurs de la chambre, la propagation de la combustion étant réalisée par chevauchement des nappes de carburant de plus grande ouverture. La chambre de combustion peut ainsi comprendre avantageusement de 16 à 26 bols et injecteurs.

La répartition régulière des orifices de plus faible diamètre et des orifices de plus grand diamètre autour de l'axe du bol permet de former des nappes coaxiales et axisymétriques entraînant une répartition homogène du mélange d'air et de carburant dans la chambre et évitant de créer des gradients de température dans la chambre.

Selon une autre caractéristique de l'invention, la rangée d'orifices d'injection d'air dans le bol comprend par exemple entre 20 et 30 orifices.

Les angles d'ouverture des nappes de carburant sont déterminés pour optimiser les performances de la turbomachine aux différents régimes de fonctionnement et pour limiter la production des gaz nocifs tels que des oxydes d'azote.

Préférentiellement, la nappe d'air et de carburant produite par les orifices de plus faible diamètre a une forme sensiblement tronconique et un angle d'ouverture compris entre 60 et 80° environ, et la nappe d'air et de carburant produite par les orifices de plus grand diamètre a une forme sensiblement tronconique et un angle d'ouverture compris entre 30 et 50° environ.

Les orifices d'injection d'air de plus faible diamètre et/ou ceux de plus grand diamètre peuvent avoir des diamètres légèrement différents les uns des autres et variant autour d'une valeur moyenne. A titre d'exemple, les orifices de plus faible diamètre ont un diamètre moyen compris entre 0,5 et 1,5mm environ, et les orifices de plus grand diamètre ont un diamètre moyen compris entre 1,5 et 2,5mm environ.

Préférentiellement, le rapport entre la longueur axiale et la dimension radiale de la chambre est compris entre 2 et 3 environ.

L'invention concerne également une turbomachine, telle qu'un turboréacteur ou un turbopropulseur d'avion, comprenant une chambre de combustion telle que décrite ci-dessus.

Le bol peut comprendre 20 à 30 orifices d'injection d'air.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une demi vue schématique en coupe axiale d'un diffuseur et d'une chambre de combustion selon l'invention d'une turbomachine ;
- la figure 2 est une vue partielle agrandie de la figure 1 et représente un système d'injection d'un mélange d'air et de carburant de la chambre,
- la figure 3 illustre très schématiquement le fonctionnement d'un bol mis en oeuvre dans une chambre de combustion selon l'invention.

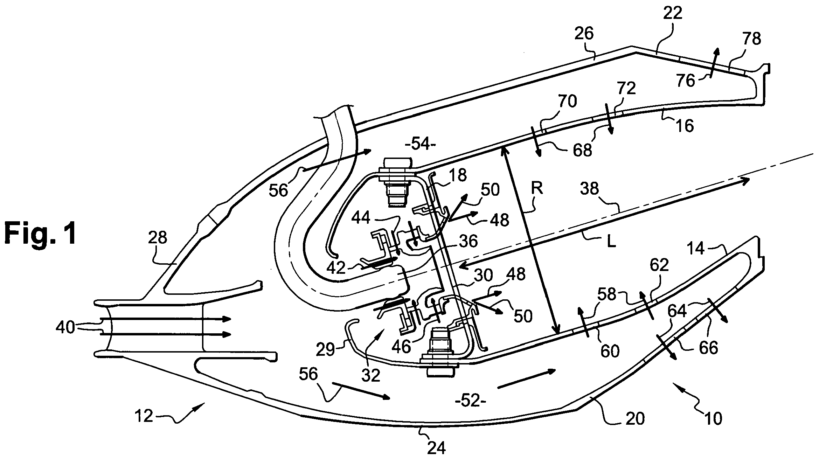

La figure 1 représente une chambre annulaire de combustion 10 d'une turbomachine telle qu'un turboréacteur d'avion, cette chambre étant agencée en sortie d'un diffuseur 12, lui même situé en sortie d'un compresseur (non représenté), et comprenant une paroi de révolution interne 14 et une paroi de révolution externe 16, reliées en amont à une paroi annulaire 18 de fond de chambre et fixées en aval par des viroles tronconiques interne 20 et externe 22 respectivement sur un voile tronconique interne 24 du diffuseur, et sur un carter externe 26 de la chambre, l'extrémité amont de ce carter étant reliée à un voile tronconique externe 28 du diffuseur.

Un carénage annulaire 29 est fixé sur les extrémités amont des parois 14, 16 et 18 de la chambre et comprend des orifices de passage d'air alignés avec des ouvertures 30 de la paroi 18 de fond de chambre dans lesquelles sont montés des systèmes 32 d'injection d'un mélange d'air et de carburant dans la chambre, l'air provenant du diffuseur 12 et le carburant étant amené par des injecteurs (non représentés) fixés sur le carter externe 26 et régulièrement répartis autour de l'axe de la chambre. Chaque injecteur comprend une tête 36 d'injection de carburant alignée sur l'axe 38 de l'ouverture 30 correspondante.

Le rapport entre la longueur axiale L et la dimension radiale R de la chambre par rapport à cet axe 38 est compris entre 2 et 3 environ de manière à répondre aux exigences des différents régimes de fonctionnement de la turbomachine en matière de temps de séjour du mélange d'air et de carburant dans la chambre, et à limiter l'émission de gaz nocifs tels que les oxydes d'azote (NOx). Le temps de séjour du mélange d'air et de carburant dans la chambre est compris entre 5 et 10ms environ.

Une partie du débit d'air 40 fourni par le compresseur et sortant du diffuseur 12 passe dans le système 32, comme cela sera décrit plus en détail dans ce qui suit, et est mélangée au carburant amené par l'injecteur et injectée dans la chambre de combustion (flèches 42, 44, 46, 48, 50), l'autre partie du débit d'air alimentant des canaux annulaires interne 52 et externe 54 de contournement de la chambre de combustion 10 (flèches 56).

Le canal interne 52 est formé entre le voile interne 24 du diffuseur 12 et la paroi interne 14 de la chambre, et l'air qui passe dans ce canal se partage en un débit 58 qui pénètre dans la chambre 10 par des orifices 60, 62 de la paroi interne 14 et en un débit 64 qui passe à travers des trous 66 de la virole interne 20 de la chambre pour aller refroidir des composants, non représentés, situés en aval de cette chambre.

Le canal externe 54 est formé entre le carter externe 26 et la paroi externe 16 de la chambre, et l'air qui passe dans ce canal se divise en un débit 68 qui pénètre dans la chambre 10 par des orifices 70, 72 de la paroi externe 16 et en un débit 76 qui passe à travers des trous 78 de la virole externe 22 pour aller refroidir des composants en aval.

Les orifices 60, 70 sont appelés orifices d'entrée d'air primaire car ils alimentent la zone dite primaire de la chambre de combustion située dans la partie amont de la chambre où les réactions de combustion du mélange d'air et de carburant ont lieu, et les orifices 62, 72 sont appelés orifices d'entrée d'air de dilution car ils alimentent la zone dite de dilution de la chambre de combustion située dans la partie aval de la chambre et dans laquelle les gaz de combustion sont dilués.

La combustion du mélange d'air et de carburant est initiée dans la zone primaire de la chambre au moyen d'une (ou de deux) bougie d'allumage (non représentée).

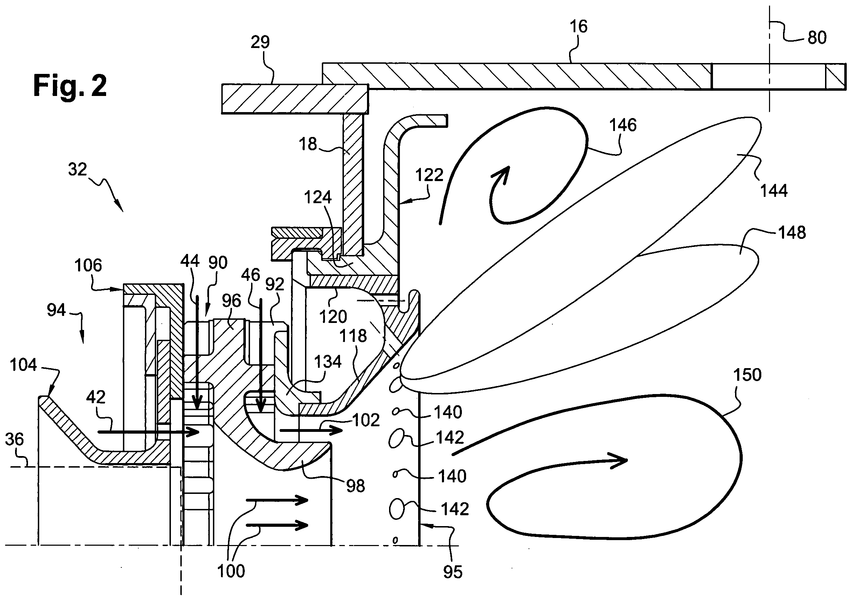

Le système d'injection 32, mieux visible en figure 2, comporte deux vrilles de turbulence amont 90 et aval 92 coaxiales reliées en amont à des moyens 94 de centrage et de guidage de la tête 36 de l'injecteur, et en aval à un bol mélangeur 95 qui est monté axialement dans l'ouverture 30 de la paroi 18 de fond de chambre.

Les vrilles 90, 92 comprennent chacune une pluralité d'aubages s'étendant radialement autour de l'axe de la vrille et régulièrement répartis autour de cet axe pour délivrer un flux d'air 44, 46 tourbillonnant en aval de la tête d'injection 36.

Les vrilles 90, 92 sont séparées l'une de l'autre par une paroi radiale 96 reliée à son extrémité radialement interne à un venturi 98 qui s'étend axialement vers l'aval à l'intérieur de la vrille aval 92 et qui sépare les écoulements d'air issus des vrilles amont 90 et aval 92. Une première veine annulaire 100 d'écoulement d'air est formée à l'intérieur du venturi et une seconde veine annulaire 102 d'écoulement d'air est formée à l'extérieur du venturi. L'air s'écoulant dans ces veines 100, 102 est destiné à se mélanger au carburant amené par l'injecteur pour former un cône de carburant pulvérisé autour de l'axe de l'injecteur.

Dans l'exemple représenté, le venturi 98 et les aubages des vrilles 90, 92 sont formés d'une seule pièce avec la paroi radiale 96.

Les moyens 94 de guidage de la tête d'injection 36 de l'injecteur comprennent une bague 104 traversée axialement par la tête d'injection 36 et montée radialement coulissante dans une douille 106 délimitant axialement avec la paroi 96 la veine annulaire de passage du flux d'air 42 dans la vrille amont 90.

Le bol mélangeur 95 a une paroi sensiblement tronconique 118 évasée en aval et reliée à son extrémité aval à un rebord cylindrique 120 monté axialement dans l'ouverture 30 de la paroi 18 de fond de chambre avec un déflecteur annulaire 122. L'extrémité amont de la paroi tronconique 118 du bol est fixée à une pièce annulaire intermédiaire 134 délimitant axialement avec la paroi radiale 96 la veine annulaire de passage du flux d'air 44 dans la vrille aval 92.

La paroi tronconique 118 du bol comporte une rangée annulaire d'orifices d'injection d'air formée par une alternance d'orifices 140 de plus faible diamètre et d'orifices 142 de plus grand diamètre.

Les orifices 140 de plus faible diamètre sont régulièrement répartis autour de l'axe du bol 95 et le débit d'air 50 sortant de ces orifices se mélange au cône de carburant sortant du venturi 98 pour former une nappe 144 d'un mélange d'air et de carburant avec un grand angle d'ouverture, cet angle d'ouverture étant optimisé pour le régime de ralenti et pour assurer une bonne initiation et une bonne propagation de la combustion dans la chambre de combustion.

La nappe de carburant produite par les orifices 140 permet de créer une zone 146 de recirculation des gaz de combustion dans la chambre, située radialement à l'extérieur de la nappe 144, qui augmente le temps de séjour des gaz dans la zone primaire de la chambre et limite la production de gaz nocifs.

Une bougie d'allumage 80 est située dans la zone primaire de la chambre, au voisinage de l'extrémité aval de la nappe 144 de grand angle d'ouverture, et permet d'initier la combustion de cette nappe qui entraîne à son tour la combustion des nappes 144 de grand angle d'ouverture produites par les bols adjacents.

Les orifices 140 peuvent avoir des diamètres qui varient légèrement par rapport à un diamètre moyen compris entre 0,5 et 1,5mm environ, et la nappe 144 produite par ces orifices a par exemple un angle d'ouverture compris entre 60 et 80° environ.

Les orifices 142 de plus grand diamètre sont régulièrement répartis autour de l'axe du bol sur la même circonférence que les orifices 140 de plus petit diamètre de manière à ce que deux orifices 142 de plus grand diamètre soient séparés par un orifice 140 de plus petit diamètre.

Le débit d'air 48 en sortie des orifices 142 se mélange au cône de carburant provenant du venturi 98 pour former une nappe 148 de carburant dont l'angle d'ouverture est relativement petit et optimisé pour le fonctionnement plein gaz de la turbomachine.

La formation de la nappe 148 engendre une zone 150 de recirculation des gaz de combustion à l'intérieur de la nappe qui réduit le temps de séjour de ces gaz dans la zone primaire de la chambre et permet également de limiter l'émission de gaz nocifs. La combustion de la nappe 148 d'un bol est provoquée par la combustion de la nappe 144 de ce même bol.

Les orifices 142 peuvent également avoir des diamètres qui varient légèrement autour d'un diamètre moyen compris entre 1,5 et 2,5mm environ, et la nappe produite par ces orifices a par exemple un angle d'ouverture compris entre 30 et 50° environ.

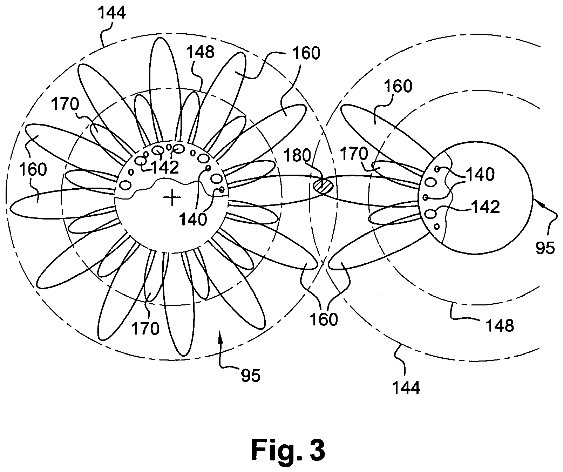

On a représenté très schématiquement en figure 3 la répartition spatiale du mélange d'air et de carburant en nappe autour d'un bol d'injection 95.

Le mélange 170 d'air et de carburant produit par un orifice 142 de plus grand diamètre a un petit angle de diffusion et est diffusé à une faible distance radiale par rapport à l'axe du bol. L'ensemble des orifices 142 d'un bol 95 permet de former une nappe annulaire 148 d'un mélange d'air et de carburant avec un angle d'ouverture relativement petit.

Le mélange 160 d'air et de carburant produit par un orifice 140 de plus faible diamètre a un grand angle de diffusion et est diffusé à une grande distance radiale par rapport à l'axe du bol. L'ensemble des orifices 140 d'un bol 95 permet de produire une nappe annulaire 144 d'un mélange d'air et de carburant avec un angle d'ouverture relativement grand. La propagation de la combustion dans la chambre est assurée par le chevauchement de parties d'extrémité aval (zones hachurées 180) des nappes 144 de grand angle d'ouverture produites par les bols d'injection.

Le contrôle des nappes 144, 148 d'air et de carburant peut être réalisé en agissant sur le rapport entre le débit d'air 102 en sortie de la vrille aval 92 et le débit d'air 48, 50 en sortie des orifices 140, 142 du bol. Ce rapport est préférentiellement compris entre 0,5 et 2 environ.

La chambre de combustion selon l'invention comprend par exemple de 16 à 26 systèmes d'injection et autant de bols mélangeurs régulièrement répartis autour de l'axe de la chambre.

## Revendications

1. Chambre de combustion d'une turbomachine, comprenant au moins un bol (95) à paroi sensiblement tronconique formé avec une rangée annulaire d'orifices d'injection d'air qui sont régulièrement répartis autour de l'axe du bol, et un injecteur de carburant agencé en amont du bol et dans l'axe de celui-ci pour produire une nappe annulaire d'un mélange d'air et de carburant injecté en aval du bol, **caractérisé en ce que** la rangée annulaire d'orifices d'injection d'air comprend des orifices (140) de plus faible diamètre et des orifices (142) de plus grand diamètre qui sont disposés en alternance et régulièrement répartis autour de l'axe du bol pour produire deux nappes annulaires (144, 148) de mélange d'air et de carburant, qui sont coaxiales et ont des angles d'ouverture différents.

2. Chambre selon la revendication 1, **caractérisé en ce que** deux orifices (142) de plus grand diamètre sont séparés par un orifice (140) de plus faible diamètre.

3. Chambre selon l'une des revendications précédentes, **caractérisé en ce que** la nappe (144) d'air et de carburant produite par les orifices (140) de plus faible diamètre a une forme sensiblement tronconique et un angle d'ouverture compris entre 60 et 80 deg. environ.

4. Chambre selon l'une des revendications précédentes, **caractérisé en ce que** la nappe (148) d'air et de carburant produite par les orifices (142) de plus grand diamètre a une forme sensiblement tronconique et un angle d'ouverture compris entre 30 et 50 deg. environ.

5. Chambre selon l'une des revendications précédentes, **caractérisé en ce que** les orifices (140) d'injection d'air de plus faible diamètre et/ou ceux (142) de plus grand diamètre ont des diamètres légèrement différents les uns des autres.

6. Chambre selon l'une des revendications précédentes, **caractérisé en ce que** les orifices (140) de plus faible diamètre ont un diamètre moyen compris entre 0,5 et 1,5mm environ, et les orifices (142) de plus grand diamètre ont un diamètre moyen compris entre 1,5 et 2,5mm environ.

7. Chambre selon l'une des revendications précédentes, **caractérisé en ce que** la rangée d'orifices comprend entre 20 et 30 orifices (140, 142) d'injection d'air.

8. Chambre selon l'une des revendications précédentes, **caractérisé en ce qu'**elle comprend de 16 à 26 bols (95) et injecteurs.

9. Chambre selon l'une des revendications précédentes, **caractérisée en ce que** le rapport entre sa longueur axiale (L) et sa dimension radiale (R) est compris entre 2 et 3.

10. Turbomachine, telle qu'un turboréacteur ou un turbopropulseur d'avion, **caractérisée en ce qu'**elle comprend une chambre de combustion (10) selon l'une des revendications précédentes.

## Patentansprüche

1. Brennkammer eines Turbotriebwerks, enthaltend zumindest eine Schale (95) mit im Wesentlichen kegelstumpfförmiger Wand, die mit einer ringförmigen Reihe von Lufteinblasöffnungen ausgebildet ist, die gleichmäßig um die Achse der Schale verteilt sind, und einen Treibstoffinjektor, welcher der Schale vorgelagert und in der Achse derselben angeordnet ist, um eine ringförmige Lage aus einem Gemisch aus Luft und Treibstoff zu bilden, das stromabwärts der Schale eingespritzt wird, **dadurch gekennzeichnet, dass** die ringförmige Reihe von Lufteinblasöffnungen Öffnungen (140) mit kleinerem Durchmesser und Öffnungen (142) mit größerem Durchmesser aufweist, die wechselweise angeordnet und um die Achse der Schale gleichmäßig verteilt sind, um zwei ringförmige Lagen (144, 148) aus dem Luft- und Treibstoff-Gemisch zu erzeugen, die koaxial verlaufen und unterschiedliche Öffnungswinkel haben.

2. Brennkammer nach Anspruch 1, **dadurch gekennzeichnet, dass** zwei Öffnungen (142) mit größerem Durchmesser durch eine Öffnung (140) mit kleinerem Durchmesser getrennt sind.

3. Brennkammer nach einem der vorangehenden Ansprüche, **dadurch gekennzeichnet, dass** die Lage (144) aus Luft und Treibstoff, die durch die Öffnungen (140) mit kleinerem Durchmesser erzeugt wird, eine im Wesentlichen kegelstumpfförmige Form und einen Öffnungswinkel zwischen etwa 60° und 80° hat.

4. Brennkammer nach einem der vorangehenden Ansprüche, **dadurch gekennzeichnet, dass** die Lage (148) aus Luft und Treibstoff, die durch die Öffnungen (142) mit größerem Durchmesser erzeugt wird, eine im Wesentlichen kegelstumpfförmige Form und einen Öffnungswinkel zwischen etwa 30° und 50° hat.

5. Brennkammer nach einem der vorangehenden Ansprüche, **dadurch gekennzeichnet, dass** die Lufteinblasöffnungen (140) mit kleinerem Durchmesser und/oder die (142) mit größerem Durchmesser sich im Durchmesser geringfügig voneinander unterscheiden.

6. Brennkammer nach einem der vorangehenden Ansprüche, **dadurch gekennzeichnet, dass** die Öffnungen (140) mit kleinerem Durchmesser einen mittleren Durchmesser zwischen etwa 0,5 und 1,5 mm haben und die Öffnungen (142) mit größerem Durchmesser einen mittleren Durchmesser zwischen etwa 1,5 und 2,5 mm haben.

7. Brennkammer nach einem der vorangehenden Ansprüche, **dadurch gekennzeichnet, dass** die Reihe von Öffnungen zwischen 20 und 30 Lufteinblasöffnungen (140, 142) aufweist.

8. Brennkammer nach einem der vorangehenden Ansprüche, **dadurch gekennzeichnet, dass** sie 16 bis 26 Schalen (95) und Injektoren enthält.

9. Brennkammer nach einem der vorangehenden Ansprüche, **dadurch gekennzeichnet, dass** das Verhältnis zwischen ihrer axialen Länge (L) und ihrer radialen Abmessung (R) zwischen 2 und 3 liegt.

10. Turbotriebwerk, wie etwa Turbostrahltriebwerk oder Turboprop-Triebwerk für Flugzeuge, **dadurch gekennzeichnet, dass** es eine Brennkammer nach einem der vorangehenden Ansprüche aufweist.

## Claims

1. A combustion chamber of a turbomachine, comprising at least one bowl (95) having a substantially frustoconical wall that is formed with an annular row of air injection orifices which are uniformly distributed around the axis of the bowl, and a fuel injector arranged upstream of the bowl and in the axis thereof to produce an annular layer of an air/fuel mixture injected downstream of the bowl, **characterized in that** the annular row of air injection orifices comprises smaller-diameter orifices (140) and larger-diameter orifices (142) which are arranged in alternating fashion and with a uniform distribution around the axis of the bowl to produce two annular air/fuel mixture layers (144,148) which are coaxial and have different opening angles.

2. The chamber as claimed in claim 1, **characterized in that** two larger-diameter orifices (142) are separated by one smaller-diameter orifice (140).

3. The chamber as claimed in either of the preceding claims, **characterized in that** the air/fuel layer (144) produced by the smaller-diameter orifices (140) has a substantially frustoconical shape and an opening angle between 60 and 80[deg.] approximately.

4. The chamber as claimed in one of the preceding claims, **characterized in that** the air/fuel layer (148) produced by the larger-diameter orifices (142) has a substantially frustoconical shape and an opening angle between 30 and 50[deg.] approximately.

5. The chamber as claimed in one of the preceding claims, **characterized in that** the smaller-diameter air injection orifices (14) and/or larger-diameter orifices (142) have diameters which are slightly different from one another.

6. The chamber as claimed in one of the preceding claims, **characterized in that** the smaller-diameter orifices (140) have a mean diameter between 0.5 and 1.5 mm approximately, and the larger-diameter orifices (142) have a mean diameter between 1.5 and 2.5 mm approximately.

7. The chamber as claimed in one of the preceding claims, **characterized in that** the row of orifices comprises between 20 and 30 air injection orifices (140,142).

8. The chamber as claimed in one of the preceding claims, which comprises from 16 to 26 bowls (95) and injectors.

9. The chamber as claimed in one of the preceding claims, **characterized in that** the ratio of its axial length (L) to its radial dimension (R) is between 2 and 3.

10. A turbomachine, such as an aircraft turbojet or turboprop, which comprises a combustion chamber (10) as claimed in one of the preceding claims.
